# EUROPEAN PATENT APPLICATION

(11) **EP 4 645 576 A1**
(43) Date of publication of application: **05.11.2025**
(21) Application number: 23952888.8
(22) Date of filing: 28.11.2023
(51) Int. Cl.: H01M 50/519, H01M 50/502, H01M 50/204

(54) **BATTERY AND ELECTRIC DEVICE**

(30) Priority: 18.09.2023 CN 202311203170
(71) Applicant: Contemporary Amperex Technology Co., Limited, Ningde, Fujian 352100 (CN)
(72) Inventor: WANG, Zengzhong, Ningde, Fujian 352100 (CN); YUAN, Shenggang, Ningde, Fujian 352100 (CN); CHEN, Juntao, Ningde, Fujian 352100 (CN); NIU, Jianxin, Ningde, Fujian 352100 (CN); GAN, Weifeng, Ningde, Fujian 352100 (CN)
(74) Representative: Gong, Jinping
(86) International application number: PCT/CN2023/134687
(87) International publication number: WO 2025/060243

(57) **Abstract**

A battery (1000) and an electric apparatus (2000) are provided. The battery (1000) includes: at least one battery pack (100), where each battery pack (100) includes: a plurality of battery rows (10), each battery row (10) includes a plurality of battery cells (11) arranged along a first direction, electrical connection portions of two adjacent battery cells (11) in each battery row (10) are connected by a first electrical connection member (30), and the plurality of battery rows (10) are arranged along a second direction; and an information collection member (20), where the information collection member (20) is disposed on one side of the plurality of battery rows (10) in a third direction, the third direction, the second direction, and the first direction are perpendicular to each other, and the information collection member (20) is electrically connected to a plurality of first electrical connection members (30) corresponding to at least two battery rows (10).

## Description

### CROSS-REFERENCE TO RELATED APPLICATIONS

This application is proposed based on Chinese Patent Application No. 202311203170.5 filed on September 18, 2023, and claims priority to this Chinese Patent Application, which is incorporated herein by reference in its entirety.

### TECHNICAL FIELD

This application relates to the field of batteries, specifically to a battery and an electric apparatus.

### BACKGROUND

Energy conservation and emission reduction are key to the sustainable development of the automotive industry. Electric vehicles, due to their advantages in energy conservation and environmental protection, have become an important part of the sustainable development of the automotive industry. For electric vehicles, battery technology is an important factor in connection with their development.

With the continuous development of the power battery industry, increasingly high requirements are imposed on various performance of batteries, leading to a continuous rise in battery costs.

### SUMMARY

In view of the above issues, this application provides a battery and an electric apparatus capable of reducing manufacturing costs.

According to a first aspect, this application provides a battery including: at least one battery pack. Each battery pack includes: a plurality of battery rows, where each battery row includes a plurality of battery cells arranged along a first direction, electrical connection portions of two adjacent battery cells in each battery row are connected by a first electrical connection member, and the plurality of battery rows are arranged along a second direction; and an information collection member, where the information collection member is disposed on one side of the plurality of battery rows in a third direction, the third direction, the second direction, and the first direction are perpendicular to each other, and the information collection member is electrically connected to a plurality of first electrical connection members corresponding to at least two battery rows.

In the technical solution of this embodiment of this application, a plurality of battery cells within each battery pack are connected to the information collection member through the first electrical connection members to facilitate connection and sampling of the plurality of battery cells, to acquire information of each battery cell, and the like. Thus, the plurality of battery rows within each battery pack can share one information collection member, effectively reducing the number of information collecti on members in the battery, thereby reducing the manufacturing costs of the battery and enhancing the market competitiveness of the product.

In some embodiments, in each battery pack, the information collection member corresponds to a central position of the plurality of battery rows in the second direction. This technical solution facilitates connection of the information collection member to the plurality of first electrical connection members. The information collection member is arranged at the center and does not need to be bent or the like, thereby minimizing a length of the information collection member and reducing the manufacturing costs of the information collection member.

In some embodiments, the information collection member extends along the first direction. In this technical solution, adopting this arrangement structure facilitates connection between the information collection member and the plurality of first electrical connection members, improving connection convenience as well as minimizing the length of the information collection member, thereby reducing the manufacturing costs of the information collection member.

In some embodiments, the electrical connection portions include a first electrical connection portion and a second electrical connection portion; the first electrical connection portion and the second electrical connection portion have opposite polarities; and the first electrical connection portion and the second electrical connection portion are located on a same side of the battery cell. This technical solution facilitates connection of the first electrical connection member to two connection portions of different polarities of two adjacent battery cells. The first electrical connection member may be disposed on a side of the battery cell where the two electrical connection portions are provided, and the information collection member may also be disposed on the same side, further improving the connection convenience.

In some embodiments, in each battery row, a first electrical connection portion of one battery cell is connected to a second electrical connection portion of an adjacent battery cell by the first electrical connection member. This technical solution enables current transmission and also enables voltage accumulation within the battery row to achieve a required output voltage.

In some embodiments, in each battery row, the first electrical connection portion of one battery cell and the second electrical connection portion of the adjacent battery cell correspond to each other in position and are connected by the first electrical connection member, and the first electrical connection member extends along the first direction. This technical solution enables current transmission between battery cells. The first electrical connection member extends along a front-rear direction, facilitating cooperation of the first electrical connection member and the two connection portions, thereby shortening the length of the first electrical connection member, reducing manufacturing costs, and also ensuring current transmission and stable voltage transmission between the battery cells within the battery row to some extent.

In some embodiments, in each battery row, the first electrical connection portion of one battery cell and the second electrical connection portion of an adjacent battery cell are misaligned in the first direction and are connected by the first electrical connection member, and an extension direction of the first electrical connection member is inclined relative to the first direction and the second direction. This technical solution enables current transmission between two battery cells. The first electrical connection member may be formed in a straight shape, simplifying the structure of the first electrical connection member and facilitating the manufacture and formation of the first electrical connection member.

In some embodiments, in each battery row, at least two adjacent battery cells form a battery group, first electrical connection portions of the battery cells within each battery group correspond to each other in position, second electrical connection portions of the battery cells within each battery group correspond to each other in position, and a first electrical connection portion of one battery group is connected to a second electrical connection portion of an adjacent battery group by the first electrical connection member. This technical solution enables current transmission, and also enables parallel connection of two adjacent battery cells, capacity accumulation of the battery cells, series connection of two adjacent groups of battery cells, and voltage accumulation within the battery rows, to achieve a required output voltage.

In some embodiments, in each battery row, a first electrical connection portion of one battery group and a second electrical connection portion of an adjacent battery group correspond to each other in position and are connected by the first electrical connection member, and the first electrical connection member extends along the first direction. In this technical solution, two second electrical connection portions of a first battery group are connected to two first electrical connection portions of a second battery group by the first electrical connection member, enabling current transmission between battery cells. The first electrical connection member extends along a front-rear direction, facilitating cooperation of the first electrical connection member and the four connection portions, thereby shortening the length of the first electrical connection member, reducing manufacturing costs, and also ensuring current transmission and stable voltage transmission between battery cells within the battery row to some extent.

In some embodiments, in each battery row, the first electrical connection portion of one battery group and the second electrical connection portion of the adjacent battery group are misaligned in the first direction and are connected by the first electrical connection member, and the first electrical connection member is bent. This technical solution facilitates connection of the first electrical connection member to the electrical connection portions of four battery cells, thereby enabling current transmission and series-parallel connection of battery cells.

In some embodiments, in two adjacent battery rows, the first electrical connection portion of the battery cell at one end of one battery row is connected to the second electrical connection portion of the battery cell at one end of the adjacent battery row by the second electrical connection member. This technical solution enables electrical connection between a battery row and an adjacent battery row, so that a plurality of battery rows are connected to provide a larger energy storage capacity or increase the output power.

In some embodiments, the battery cell includes a pressure relief portion, the pressure relief portion and the electrical connection portion are located on a same side of the battery cell, and projections of the pressure relief portion and the first electrical connection member along the third direction do not overlap. In this technical solution, by misaligning the first electrical connection member and the pressure relief portion, the reliability and stability of the battery cell can be enhanced, reducing safety hazards to some extent.

In some embodiments, the battery cell includes a pressure relief portion, and the pressure relief portion and the electrical connection portion are located on different sides of the battery cell. In this technical solution, by cooperating with the electrical connection portions, the first electrical connection member and the second electrical connection member do not interfere with the pressure relief portion, allowing high-pressure gas within the battery cell to be discharged through the pressure relief portion, improving the effectiveness of gas discharge by the pressure relief portion, and enhancing the reliability and stability of the battery cell.

In some embodiments, the plurality of battery rows include a first battery row and a second battery row. The first battery row includes a plurality of first battery cells, two adjacent first battery cells are connected by a first electrical connection member, the second battery row is located on one side of the first battery row in the second direction and includes a plurality of second battery cells, two adjacent second battery cells are connected by a first electrical connection member, one first battery cell is connected to one second battery cell by a second electrical connection member, and the information collection member is electrically connected to a plurality of first electrical connection members and second electrical connection members corresponding to the first battery row and the second battery row. This technical solution enables collection of information from a plurality of battery cells in the first battery row and the second battery row, such as collection of temperature and voltage, facilitating status monitoring of the battery cells.

In some embodiments, the information collection member is directly connected to the first electrical connection member. This technical solution can reduce the number of components, reduce the manufacturing costs, and also reduce assembly operations, thereby improving assembly efficiency.

In some embodiments, one of the information collection member and the first electrical connection member includes a leg, and the other of the information collection member and the first electrical connection member is connected to the leg. In this technical solution, the provision of the leg facilitates connection of the information collection member and the first electrical connection member without excessively increasing the size of the information collection member or the first electrical connection member, thereby reducing manufacturing costs.

In some embodiments, the information collection member and the first electrical connection member are welded. In this technical solution, the information collection member and the first electrical connection member are connected through welding, enabling reliable connection therebetween, also enabling transmission of electrical signals, and facilitating connection, thereby improving assembly efficiency.

In some embodiments, each battery pack further includes a conductive member, and the first electrical connection member is connected to the information collection member through the conductive member. In this technical solution, the conductive member may be a nickel sheet, and the nickel sheet is made of a conductive material capable of effectively transmitting current and having good corrosion resistance.

In some embodiments, each battery pack further includes a temperature collection module, and the temperature collection module is suitable for abutting against the battery cell to collect a temperature of the battery cell. This technical solution can facilitate timely detection of temperature anomalies and implementation of appropriate measures, such as heat dissipation or threshold alarms, to ensure the use safety and use performance of the battery cell.

In some embodiments, the temperature collection module is integrated on the information collection member. In this technical solution, integrating the temperature collection module on the information collection member can facilitate measurement and recording of the temperature of the battery cell, allowing temperature data to be processed and analyzed together with other parameter data. Thus, the information collection member not only has the function of collecting other parameters of the battery cell but also has the function of collecting the temperature of the battery cell.

In some embodiments, the temperature collection module is integrated on the first electrical connection member. In this technical solution, integrating the temperature collection module on the first electrical connection member can facilitate measurement of the temperature of the battery cell and transmission of temperature data to a battery management system or other monitoring devices for real-time monitoring and analysis, enabling real-time control of the temperature of the battery cell and timely response to and management of temperature anomalies. Thus, the first electrical connection member can not only transmit current but also collect temperature, expanding the functions of the first electrical connection member.

In some embodiments, the information collection member is a flexible circuit board. In this technical solution, using a flexible circuit board can, to some extent, prevent a situation that high-pressure gas cannot be discharged, reducing safety hazards.

According to a second aspect, this application provides an electric apparatus including the battery of the above embodiments, where the battery is configured to provide electrical energy.

The above description is only an overview of the technical solutions of this application. To enable a clearer understanding of the technical means of this application and implementation in accordance with the content of the specification, and to make the above and other objectives, features, and advantages of this application more apparent, specific embodiments of this application are provided below.

### BRIEF DESCRIPTION OF DRAWINGS

By reading the detailed description of the preferred embodiments below, various other advantages and benefits will become clear to those of ordinary skill in the art. The accompanying drawings are provided merely for the purpose of illustrating the preferred embodiments and are not considered to limit this application. Throughout the accompanying drawings, the same reference signs denote the same components. In the accompanying drawings:
FIG. 1 is a schematic diagram of an electric apparatus in the related art;
FIG. 2 is a schematic diagram of a battery in the related art;
FIG. 3 is a schematic diagram of a battery cell in the related art;
FIG. 4 is a schematic diagram of another battery cell in the related art;
FIG. 5 is a schematic diagram of a battery according to some embodiments of this application;
FIG. 6 is a schematic diagram of a battery pack according to some embodiments of this application;
FIG. 7 is a schematic diagram of a battery pack according to some other embodiments of this application;
FIG. 8 is a schematic diagram of a battery pack according to still some other embodiments of this application;
FIG. 9 is a schematic diagram of a battery pack according to yet some other embodiments of this application;
FIG. 10 is a schematic diagram of a battery pack according to further some embodiments of this application;
FIG. 11 is a schematic diagram of a battery pack according to still further some embodiments of this application; and
FIG. 12 is a schematic diagram of a battery pack according to yet further some embodiments of this application.

Reference signs:
battery 1000, electric apparatus 2000, box 200, upper shell 210, lower shell 220,
battery pack 100,
battery row 10, first battery row 101, second battery row 102, battery group 103, battery cell 11, first electrical connection portion 111, second electrical connection portion 112, pressure relief portion 113,
information collection member 20, leg 21, connector 22,
first electrical connection member 30, first connection segment 31, second connection segment 32, third connection segment 33,
second electrical connection member 40, fourth connection segment 41, fifth connection segment 42, sixth connection segment 43, and
conductive member 50.

### DESCRIPTION OF EMBODIMENTS

To make the objectives, technical solutions, and advantages of the embodiments of this application clearer, the technical solutions in the embodiments of this application are described clearly below with reference to the accompanying drawings. The described embodiments are some rather than all of the embodiments of this application. Based on the embodiments in this application, all other embodiments obtained by those of ordinary skill in the art without creative efforts fall within the protection scope of this application.

Unless otherwise defined, all technical and scientific terms used in this application have the same meaning as commonly understood by those skilled in the technical field of this application. Terms used in the specification of this application are merely for the purpose of describing specific embodiments and are not intended to limit this application. The terms "include", "comprise" and any variations thereof in the specification, claims, and descriptions of the accompanying drawings of this application are intended to cover non-exclusive inclusion. In the specification, claims, or accompanying drawings of this application, the terms "first", "second", and the like are intended to distinguish between different objects rather than to describe a particular order or a primary-secondary relationship.

Reference to "embodiment" in this application means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, unless otherwise specified and defined explicitly, the terms "mounting", "connection", "join", and "attachment" should be understood in their general senses. For example, they may refer to a fixed connection, a detachable connection, or an integral connection; and may refer to a direct connection, an indirect connection via an intermediate medium, or an internal communication between two elements. Those of ordinary skill in the art can understand the specific meanings of the above terms in this application based on specific circumstances.

The term "and/or" in this application is merely an association relationship describing associated objects, indicating that three relationships may exist. For example, A and/or B may indicate: only A is present; both A and B are present; and only B is present. Additionally, the character "/" in this application generally indicates an "or" relationship between the contextually associated objects.

In the embodiments of this application, the same reference signs denote the same components. For brevity, detailed descriptions of the same components are not repeated in different embodiments. It should be understood that the dimensions such as thickness, length, and width of various components in the embodiments of this application shown in the drawings, as well as the overall thickness, length, and width of integrated apparatuses, are merely illustrative descriptions and do not limit this application.

The term "a plurality of" in this application refers to two or more (including two).

In this application, a battery refers to a single physical module including one or more battery cells to provide higher voltage and capacity. For example, the battery mentioned in this application may include a battery module, a battery pack, or the like. Some batteries may include a box for encapsulating one or more battery cells or a plurality of battery modules. The box can prevent liquids or other foreign objects from affecting the charging or discharging of the battery cells. Certainly, some batteries may not include such box and are directly disposed in a battery installation compartment of an electric apparatus.

In this application, battery cells may include lithium-ion secondary batteries, lithium-ion primary batteries, lithium-sulfur batteries, sodium-lithium-ion batteries, sodium-ion batteries, or magnesium-ion batteries, and this is not limited in the embodiments of this application. Battery cells may be cylindrical, flat, rectangular, or in other shapes, and this is not limited in the embodiments of this application either. Battery cells are generally divided into three types based on packaging methods: cylindrical battery cells, prismatic battery cells, and pouch battery cells, and this is not limited in the embodiments of this application either.

For example, a battery cell may include a housing, an electrode assembly, and an electrolyte. The housing is configured to accommodate the electrode assembly and the electrolyte. The electrode assembly includes a positive electrode plate, a negative electrode plate, and a separator. The operation of the battery cell mainly relies on the migration of metal ions between the positive electrode plate and the negative electrode plate. The positive electrode plate includes a positive electrode current collector and a positive electrode active material layer, where the positive electrode active material layer is applied onto a surface of the positive electrode current collector, a portion of the positive electrode current collector not coated with the positive electrode active material layer protrudes from a portion of the positive electrode current collector coated with the positive electrode active material layer, and the portion of the positive electrode current collector not coated with the positive electrode active material layer serves as a positive electrode tab. Taking a lithium-ion battery as an example, the positive electrode current collector may be made of aluminum, and the positive electrode active material may be lithium cobaltate, lithium iron phosphate, ternary lithium, lithium manganate, or the like.

The negative electrode plate includes a negative electrode current collector and a negative electrode active material layer, where the negative electrode active material layer is applied onto a surface of the negative electrode current collector, a portion of the negative electrode current collector not coated with the negative electrode active material layer protrudes from a portion of the negative electrode current collector coated with the negative electrode active material layer, and the portion of the negative electrode current collector not coated with the negative electrode active material layer serves as a negative electrode tab. The negative electrode current collector may be made of copper, and the negative electrode active material may be carbon, silicon, or the like. To ensure that large currents can pass without fusing, a plurality of positive electrode tabs may be stacked together, and a plurality of negative electrode tabs may be stacked together.

The separator may be made of PP (polypropylene, polypropylene), PE (polyethylene, polyethylene), or the like. Additionally, the electrode assembly may be a wound structure or a laminated structure, and the embodiments of this application are not limited thereto.

The battery cell may be provided with poles and the like connected to the tabs, serving as electrical connection portions of the battery cell. Furthermore, the battery cell may include a pressure relief portion. When an internal pressure of the battery cell becomes excessive (for example, during thermal runaway), the pressure relief portion is configured to release internal substances of the battery cell (for example, gases, liquids, and particulates) to reduce the internal pressure of the battery cell, avoiding dangerous incidents such as battery cell combustion or explosion caused by excessively fast pressurization in the battery cell. For example, the pressure relief portion may be an explosion-proof valve, an explosion-proof plate, or the like.

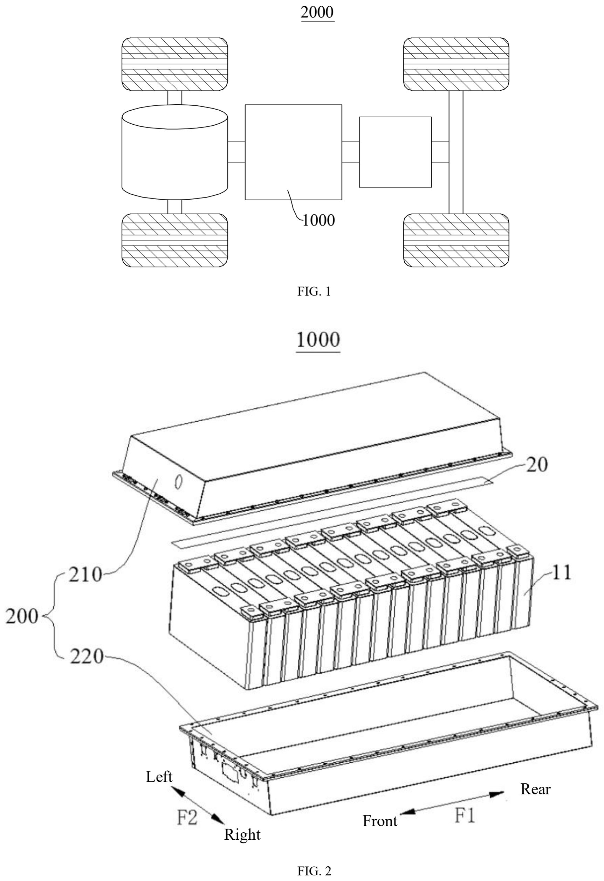

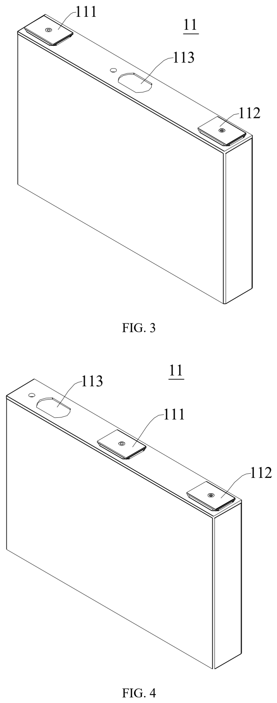

For example, as shown in FIG. 1 and FIG. 2, in some electric apparatuses 2000, a battery 1000 is used for power supply. The battery 1000 includes a box 200 and a battery cell 11. The box 200 includes an upper shell 210 and a lower shell 220. The battery cell 11 is disposed within the box 200. As shown in FIG. 3 and FIG. 4, the battery cell 11 includes electrical connection portions and a pressure relief portion 113. The electrical connection portions include a first electrical connection portion 111 and a second electrical connection portion 112. The pressure relief portion 113 and the electrical connection portions may be located on a same side of the battery cell 11. As shown in FIG. 3, the pressure relief portion 113 is located between the first electrical connection portion 111 and the second electrical connection portion 112. Alternatively, as shown in FIG. 4, the pressure relief portion 113 is located on the same side as the first electrical connection portion 111 and the second electrical connection portion 112.

To ensure the various performance of the battery 1000, a sampling assembly is typically provided within the box 200, where the sampling assembly is connected to the electrical connection portions of the battery cells 11 to collect signals from the battery cell 11, such as voltage and temperature. The sampling assembly includes an information collection member 20, and the information collection member 20 has a high cost. In conventional technology, each row of battery cells 11 in the battery 1000 requires one information collection member 20. A large-capacity battery 1000 typically include a plurality of rows of battery cells 11, resulting in a high demand for information collection members 20, thereby increasing the manufacturing costs of the battery 1000.

To address this, this application proposes a battery 1000 including at least one battery pack 100. Each battery pack 100 includes: a plurality of battery rows 10 and an information collection member 20. Each battery row 10 includes a plurality of battery cells 11 arranged along a first direction F1. In each battery row 10, electrical connection portions of two adjacent battery cells 11 are connected by a first electrical connection member 30. The plurality of battery rows 10 are arranged along a second direction F2. The information collection member 20 is disposed on one side of the plurality of battery rows 10 in a third direction F3. The third direction F3, the second direction F2, and the first direction F1 are perpendicular to each other. The information collection member 20 is electrically connected to a plurality of first electrical connection members 30 corresponding to at least two battery rows 10.

In the battery 1000 with the above structure, the plurality of battery cells 11 within each battery pack 100 are connected to the information collection member 20 through the first electrical connection members 30 to facilitate connection and sampling of the plurality of battery cells 11, to acquire information of each battery cell 11, and the like. Thus, the plurality of battery rows 10 within each battery pack 100 can share one information collection member 20, effectively reducing the number of information collection members 20 in the battery 1000, thereby reducing the manufacturing costs of the battery 1000 and enhancing the market competitiveness of the product.

The battery 1000 disclosed in the embodiments of this application may be used in, but is not limited to, electric apparatuses 2000 such as vehicles, ships, or aircraft. The battery 1000 disclosed in this application can be used as a power supply system of the electric apparatus 2000, to ensure the use safety and reliability of the electric apparatus 2000.

For example, the electric apparatus 2000 disclosed in the embodiments of this application may be, but is not limited to, vehicles, mobile phones, tablets, laptops, ships, spacecraft, electric toys, and electric tools. Vehicles may be fuel vehicles, gas vehicles, new energy vehicles, or rail vehicles. New energy vehicles may be battery electric vehicles, hybrid vehicles, extended-range vehicles, or the like. Spacecraft include airplanes, rockets, space shuttles, spaceships, and the like. Electric toys include fixed or mobile electric toys, such as game consoles, electric vehicle toys, electric toy ships, electric toy airplanes, and the like. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers.

The battery 1000 according to the embodiments of this application is described below with reference to the accompanying drawings.

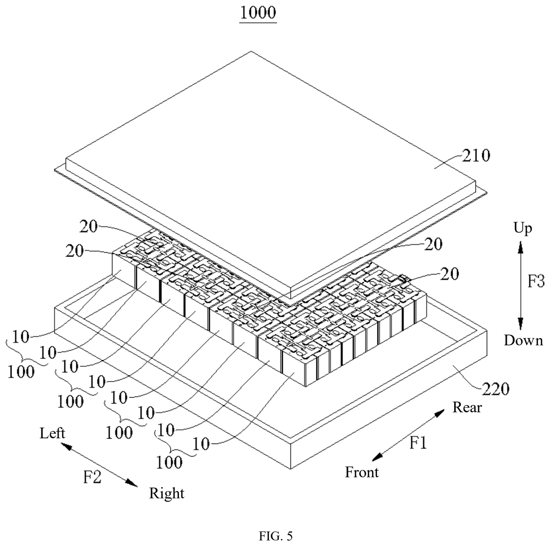

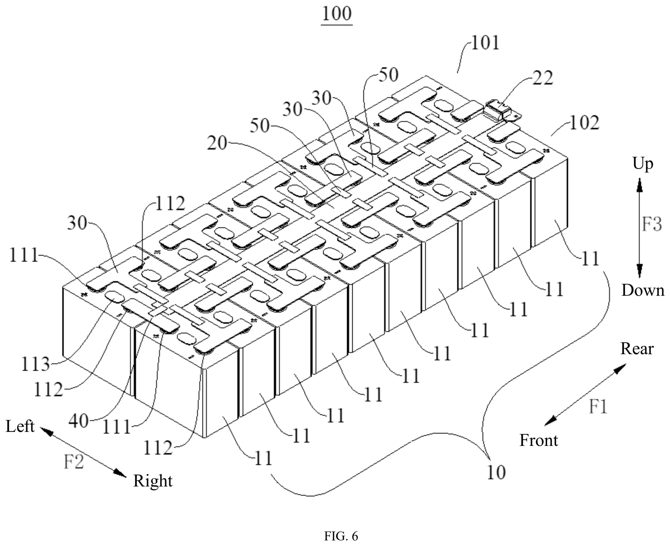

As shown in FIG. 5 to FIG. 12, FIG. 5 illustrates a schematic diagram of a battery according to some embodiments of this application; and FIG. 6 to FIG. 12 illustrate schematic diagrams of a battery pack 100 according to some embodiments of this application. As shown in FIG. 5, the battery 1000 includes at least one battery pack 100. Each battery pack 100 include: a plurality of battery rows 10 and an information collection member 20. Each battery row 10 includes a plurality of battery cells 11 arranged along a first direction F1. In each battery row 10, electrical connection portions of two adjacent battery cells 11 are connected by a first electrical connection member 30. The plurality of battery rows 10 are arranged along a second direction F2. The information collection member 20 is disposed on one side of the plurality of battery rows 10 in a third direction F3. The third direction F3, the second direction F2, and the first direction F1 are perpendicular to each other. The information collection member 20 is electrically connected to a plurality of first electrical connection members 30 corresponding to at least two battery rows 10.

As shown in FIG. 5, the first direction F1 is a front-rear direction, the second direction F2 is a left-right direction, and the third direction F3 is an up-down direction. As shown in FIG. 5, the battery 1000 includes a plurality of battery packs 100. Each battery pack 100 includes a plurality of battery rows 10. There may be two, three, or more battery rows 10 in each battery pack 100, and the plurality of battery rows 10 are arranged along the left-right direction.

Each battery row 10 includes a plurality of battery cells 11, and the plurality of battery cells 11 are arranged along the front-rear direction. The battery cell 11 may include a housing, an electrode assembly, and an electrolyte. The housing is configured to accommodate the electrode assembly and the electrolyte. The electrode assembly includes a positive electrode plate, a negative electrode plate, and a separator. The electrical connection portions are disposed on the housing, and the electrical connection portions may be connected to the tabs of the electrode assembly through adapters. The battery cell 11 includes two electrical connection portions having different polarities, which are correspondingly connected to the positive electrode tab and the negative electrode tab.

The electrical connection portions of two adjacent battery cells 11 are connected by a first electrical connection member 30, so that the plurality of battery cells 11 are connected into a row, enabling series or parallel connection of the electrical connection portions of the battery cells 11. It can be understood that the first electrical connection member 30 may connect electrical connection portions of the same polarity of two battery cells 11 or electrical connection portions of different polarities of two battery cells 11. The first electrical connection member 30 may be flat or substantially flat, and a material of the first electrical connection member 30 may include aluminum, copper, or the like.

Certainly, the battery 1000 may further include one battery pack 100. The battery pack 100 includes a plurality of battery rows 10. There may be two, there, or more battery rows 10 in the battery pack 100, and the plurality of battery rows 10 are arranged along the left-right direction.

As shown in FIG. 5 to FIG. 12, one battery pack 100 is provided with one information collection member 20, and the information collection member 20 is disposed above the plurality of battery rows 10. The information collection member 20 is electrically connected to a plurality of first electrical connection members 30 on the battery row 10, and is then connected to the electrical connection portions of the battery cells 11 through the first electrical connection members 30, thereby enabling collection of information from the plurality of battery cells 11 in the battery row 10, such as collection of temperature or voltage. An end of the information collection member 20 may be connected to a connector 22, so that signals collected by the information collection member 20 can be outputted through the connector 22, facilitating status monitoring of the battery cells 11.

As shown in FIG. 5, the provision of one information collection member 20 on the plurality of battery rows 10 in one battery pack 100 allows one information collection member 20 to correspond to two or more battery rows 10. That is, the plurality of battery rows 10 can share one information collection member 20. Compared to the provision of one information collection member 20 for one battery row 10, this can effectively reduce the number of information collection members 20 in the battery 1000, reducing the cost of the information collection members 20 and thus reducing the manufacturing costs of the battery 1000.

In these embodiments, the plurality of battery cells 11 within each battery pack 100 are connected to the information collection member 20 through the first electrical connection members 30 to facilitate connection and sampling of the plurality of battery cells 11, to acquire information of each battery cell 11, and the like. Thus, the plurality of battery rows 10 within each battery pack 100 can share one information collection member 20, effectively reducing the number of information collection members 20 in the battery 1000, thereby reducing the manufacturing costs of the battery 1000 and enhancing the market competitiveness of the product.

As shown in FIG. 5 to FIG. 12, in some embodiments, in each battery pack 100, the information collection member 20 corresponds to a central position of the plurality of battery rows 10 in the second direction F2.

As shown in FIG. 5 and FIG. 6, the plurality of battery rows 10 of one battery pack 100 are arranged along the left-right direction. In the left-right direction, the information collection member 20 is located at the center of the plurality of battery rows 10. The center may be the exact middle of the plurality of battery rows 10 or a position close to the center of the plurality of battery rows 10. As shown in FIG. 6, the battery pack 100 includes two battery rows 10. The information collection member 20 may be located above the two battery rows 10, with one part of the information collection member 20 corresponding to one battery row 10 and another part of the information collection member 20 corresponding to the other battery row 10. Alternatively, the information collection member 20 may be located above one battery row 10 and adjacent to the other battery row 10.

Adopting the above arrangement structure can facilitate connection of the information collection member 20 to the plurality of first electrical connection members 30. The information collection member 20 is arranged at the center, and the information collection member 20 does not need to be bent, thereby minimizing the length of the information collection member 20 and reducing the manufacturing costs of the information collection member 20.

As shown in FIG. 6 to FIG. 12, in some embodiments, the information collection member 20 extends along the first direction F1.

As shown in FIG. 6 to FIG. 12, the information collection member 20 extends along the front-rear direction, and the plurality of battery cells 11 are arranged along the front-rear direction. Thus, the extension direction of the information collection member 20 is the same as the arrangement direction of the battery cells 11, facilitating cooperation of the information collection member 20 and the first electrical connection members 30 on the plurality of battery cells 11, and improving the connection convenience. Additionally, the information collection member 20 may be arranged at the center of the plurality of battery rows 10, and the information collection member 20 does not need to be bent, thereby minimizing the length of the information collection member 20. The length of the information collection member 20 may be approximately equal to a total thickness of the plurality of battery cells 11, thus reducing the manufacturing costs of the information collection member 20.

In this technical solution, adopting the above arrangement structure can facilitate connection of the information collection member 20 to the plurality of first electrical connection members 30, improving the connection convenience and also minimizing the length of the information collection member 20, thereby reducing the manufacturing costs of the information collection member 20.

As shown in FIG. 3, FIG. 4, and FIG. 6 to FIG. 12, in some embodiments, the electrical connection portions include a first electrical connection portion 111 and a second electrical connection portion 112, the first electrical connection portion 111 and the second electrical connection portion 112 have opposite polarities, and the first electrical connection portion 111 and the second electrical connection portion 112 are located on a same side of the battery cell 11.

As shown in FIG. 6 to FIG. 12, the battery cell 11 includes a first electrical connection portion 111 and a second electrical connection portion 112, and these two connection portions have opposite polarities, to be specific, one is positive and the other is negative. The first electrical connection portion 111 and the second electrical connection portion 112 are located on a same side of the battery cell 11, facilitating connection of the first electrical connection member 30 to two connection portions of different polarities of two adjacent battery cells 11. The first electrical connection member 30 may be disposed on a side of the battery cell 11 where the two electrical connection portions are provided, and the information collection member 20 may also be disposed on the same side, further improving the connection convenience.

The following embodiments describe the first electrical connection portion 111 as a positive electrode connection portion and the second electrical connection portion 112 as a negative electrode connection portion.

As shown in FIG. 6 to FIG. 8, in some embodiments, in each battery row 10, a first electrical connection portion 111 of one battery cell 11 is connected to a second electrical connection portion 112 of an adjacent battery cell 11 by a first electrical connection member 30.

As shown in FIG. 6 to FIG. 8, in each battery row 10, the first electrical connection portion 111 of one battery cell 11 is connected to the second electrical connection portion 112 of the adjacent battery cell 11 by the first electrical connection member 30, enabling series connection of the battery cells 11 in the battery row. To be specific, one first electrical connection member 30 connects two battery cells 11, thereby enabling current transmission as well as accumulation of voltages within the battery row 10 to achieve a required output voltage.

As shown in FIG. 6, in some embodiments, in each battery row 10, a first electrical connection portion 111 of one battery cell 11 and a second electrical connection portion 112 of an adjacent battery cell 11 correspond to each other in position, the two electrical connection portions are connected by a first electrical connection member 30, and the first electrical connection member 30 extends along the first direction F1.

As shown in FIG. 6, in each battery row 10, a plurality of battery cells 11 are arranged along the front-rear direction. In the case where a first electrical connection portion 111 of one battery cell 11 and a second electrical connection portion 112 of an adjacent battery cell 11 correspond to each other in position, taking the first battery cell 11 on a front side as an example, the first electrical connection portion 111 of this battery cell is located on a left side of the second electrical connection portion 112, and the second electrical connection portion 112 of the other battery cell 11 is located on a rear side of the first electrical connection portion 111 of this battery cell 11. Thus, the first electrical connection portion 111 on the front side and the second electrical connection portion 112 on the rear side are connected by the first electrical connection member 30, enabling current transmission between battery cells 11. The first electrical connection member 30 extends along the front-rear direction, facilitating cooperation of the first electrical connection member 30 and the two connection portions, thereby shortening the length of the first electrical connection member 30, reducing the manufacturing costs, and also ensuring current transmission and stable voltage transmission between battery cells 11 within the battery row 10 to some extent.

The first electrical connection member 30 is connected to the information collection member 20, and the extension directions of the first electrical connection member 30 and the information collection member 20 may be the same, reducing interference between the first electrical connection member 30 and the information collection member 20, and improving the connection convenience and reliability. Additionally, the connection between the first electrical connection member 30 and the information collection member 20 may be connected directly or indirectly, for example, being connected through a conductive member 50. A leg may extend toward the information collection member 20 from the first electrical connection member 30, and the leg is connected to the information collection member 20. To be specific, the first electrical connection member 30 forms a T shape, shortening a distance between the first electrical connection member 30 and the information collection member 20, thereby facilitating the connection therebetween.

As shown in FIG. 6, in some specific examples, each battery row 10 includes two rows of first electrical connection members 30. The first row of first electrical connection members 30 are spaced apart along the first direction, and this row of first electrical connection members 30 form a straight shape. The second row of first electrical connection members 30 are spaced apart along the first direction, and this row of first electrical connection members 30 form a T shape. The second row is located on a side of the first row away from the information collection member 20.

In some optional examples, the first row of first electrical connection members 30 may be connected to the information collection member 20 using a same conductive member 50, and the second row of first electrical connection members 30 may be connected to the information collection member 20 using a same conductive member 50. To be specific, the conductive member 50 connecting the first row of first electrical connection members 30 to the information collection member 20 may be a structural member of a uniform size, and the conductive member 50 connecting the second row of first electrical connection members 30 to the information collection member 20 may be a structural member of a uniform size, reducing the manufacturing costs and also facilitating connection of the conductive member 50 to each first electrical connection member 30, thereby improving assembly efficiency.

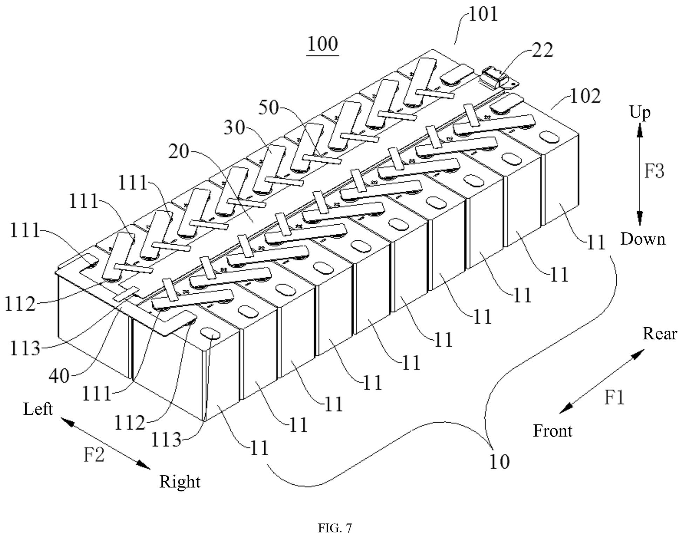

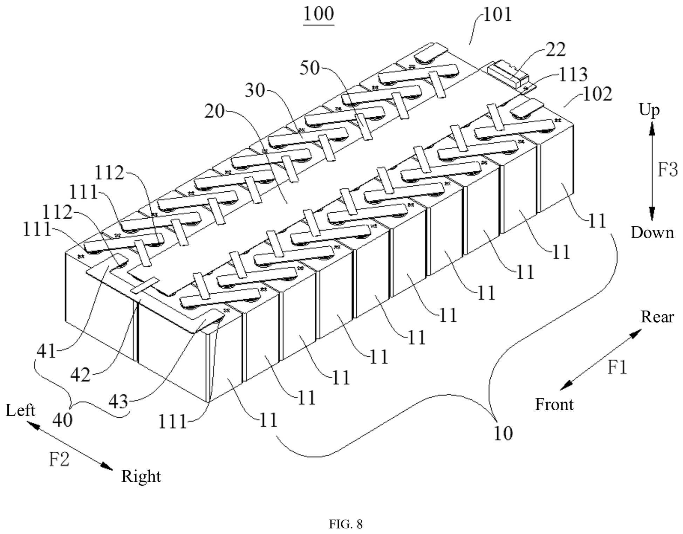

As shown in FIG. 7 and FIG. 8, in some embodiments, in each battery row 10, a first electrical connection portion 111 of one battery cell 11 and a second electrical connection portion 112 of an adjacent battery cell 11 are misaligned in the first direction F1, the two electrical connection portions are connected by a first electrical connection member 30, and an extension direction of the first electrical connection member 30 is inclined relative to the first direction F1 and the second direction F2.

As shown in FIG. 7 and FIG. 8, in each battery row 10, a plurality of battery cells 11 are arranged along the front-rear direction. The first electrical connection portion 111 of each battery cell 11 is located on a same side (on the same side in the left-right direction) as the second electrical connection portion 112 of the battery cell 11, and the two electrical connection portions of each battery cell 11 are arranged in a same manner. Thus, electrical connection portions of the same polarity of two adjacent battery cells 11 are opposite each other, and a first electrical connection portion 111 of one battery cell 11 and a second electrical connection portion 112 of an adjacent battery cell 11 are misaligned.

Taking the first battery cell 11 on a front side in FIG. 7 as an example, the first electrical connection portion 111 of the first battery cell 11 is located on a left side of the second electrical connection portion 112, the first electrical connection portion 111 of another battery cell 11 is located on a rear side of the first electrical connection portion 111 of the first battery cell 11, and the second electrical connection portion 112 of the another battery cell 11 is located on a right side of this first electrical connection portion 111. The first electrical connection portion 111 on the front side and the second electrical connection portion 112 on the rear side are connected by the first electrical connection member 30, and the first electrical connection member 30 extends gradually to the right from front to rear, enabling current transmission between the two battery cells 11. The first electrical connection member 30 may be formed in a straight shape, simplifying the structure of the first electrical connection member 30 and facilitating the manufacture and formation of the first electrical connection member 30. In this battery row 10, all the first electrical connection members 30 extend in a same direction, and the plurality of first electrical connection members 30 are spaced apart along the front-rear direction, thereby reducing the likelihood of interference between the first electrical connection members 30 and other components, and facilitating connection of the first electrical connection members 30 to the electrical connection portions.

In some optional examples, the first electrical connection members 30 may be connected to the information collection member 20 using a same conductive member 50. To be specific, the conductive member 50 may be a structural member of a uniform size, reducing the manufacturing costs and also facilitating connection of the conductive member 50 to each first electrical connection member 30, thereby improving assembly efficiency. Optionally, an extension direction of each conductive member 50 is inclined relative to the first direction F1 and the second direction F2. Optionally, the extension direction of the conductive member 50 is perpendicular to the extension direction of the first electrical connection member 30.

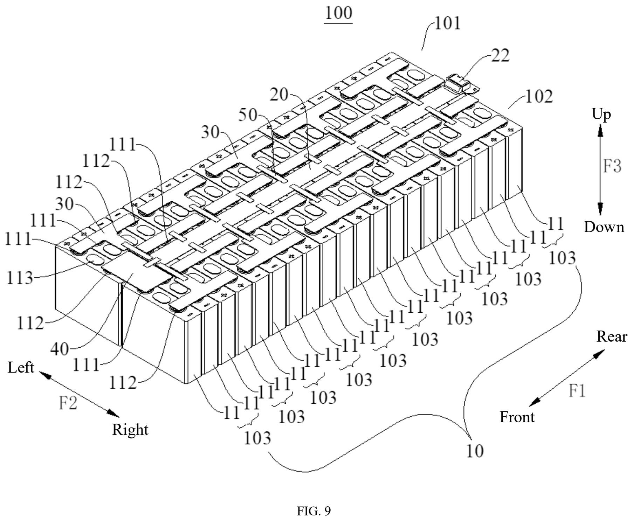

As shown in FIG. 9 to FIG. 11, in some embodiments, in each battery row 10, at least two adjacent battery cells 11 form a battery group 103, first electrical connection portions 111 of the battery cells 11 within each battery group 103 correspond to each other in position, second electrical connection portions 112 of the battery cells 11 within each battery group 103 correspond to each other in position, and a first electrical connection portion 111 of one battery group 103 is connected to a second electrical connection portion 112 of an adjacent battery group 103 by a first electrical connection member 30.

As shown in FIG. 9 to FIG. 11, in each battery row 10, two adjacent battery cells 11 form a battery group 103. The first electrical connection portions 111 of two adjacent battery cells 11 and the second electrical connection portions 112 of another two adjacent battery cells 11 are connected by a first electrical connection member 30. To be specific, one first electrical connection member 30 connects the corresponding electrical connection portions of four adjacent battery cells 11, enabling current transmission, parallel connection of two adjacent battery cells 11, capacity accumulation of the battery cells 11, series connection of two adjacent groups of battery cells 11, and voltage accumulation within the battery row 10 to achieve a required output voltage.

Certainly, three adjacent battery cells 11 may form a battery group 103, or more battery cells 11 form a battery group 103.

As shown in FIG. 9, in some embodiments, in each battery row 10, a first electrical connection portion 111 of one battery group 103 and a second electrical connection portion 112 of an adjacent battery group 103 correspond to each other in position and are connected by a first electrical connection member 30, and the first electrical connection member 30 extends along the first direction F1.

As shown in FIG. 9, in each battery row 10, two adjacent battery cells 11 form a battery group 103. The first electrical connection portions 111 of two battery cells 11 within each battery group 103 correspond to each other in position. The first electrical connection portion 111 of one battery group 103 and the second electrical connection portion 112 of the adjacent battery group 103 correspond to each other in position and are connected by a first electrical connection member 30. Taking the four battery cells 11 on the front side as an example, the first two battery cells 11 form a first battery group 103, with their first electrical connection portions 111 located on a left side of their second electrical connection portions 112. The latter two battery cells 11 form a second battery group 103, with their first electrical connection portions 111 located on a right side of their second electrical connection portions 112. Thus, two second electrical connection portions 112 of the first battery group 103 and two first electrical connection portions 111 of the second battery group 103 are connected by the first electrical connection member 30, enabling current transmission between battery cells 11. The first electrical connection member 30 extends along the front-rear direction, facilitating cooperation of the first electrical connection member 30 and the four electrical connection portions, thereby reducing the number of the first electrical connection members 30, reducing the manufacturing costs, and also ensuring current transmission and stable voltage transmission between battery cells 11 within the battery row 10 to some extent.

The first electrical connection member 30 is connected to the information collection member 20, and the extension directions of the first electrical connection member 30 and the information collection member 20 may be the same, reducing interference between the first electrical connection member 30 and the information collection member 20, and improving the connection convenience and reliability. Additionally, the connection between the first electrical connection member 30 and the information collection member 20 may be connected directly or indirectly, for example, being connected through a conductive member 50. A leg may extend toward the information collection member 20 from the first electrical connection member 30, and the leg is connected to the information collection member 20. To be specific, the first electrical connection member 30 forms a T shape, shortening a distance between the first electrical connection member 30 and the information collection member 20, thereby facilitating the connection therebetween.

As shown in FIG. 9, in some specific examples, each battery row 10 includes two rows of first electrical connection members 30. The first row of first electrical connection members 30 are spaced apart along the first direction, and this row of first electrical connection members 30 form a straight shape. The second row of first electrical connection members 30 are spaced apart along the first direction, and this row of first electrical connection members 30 form a T shape. The second row is located on a side of the first row away from the information collection member 20. In some optional examples, the first row of first electrical connection members 30 may be connected to the information collection member 20 using a same conductive member 50, and the second row of first electrical connection members 30 may be connected to the information collection member 20 using a same conductive member 50. To be specific, the conductive member 50 connecting the first row of first electrical connection members 30 to the information collection member 20 may be a structural member of a uniform size, and the conductive member 50 connecting the second row of first electrical connection members 30 to the information collection member 20 may be a structural member of a uniform size, reducing the manufacturing costs and also facilitating connection of the conductive member 50 to each first electrical connection member 30, thereby improving assembly efficiency.

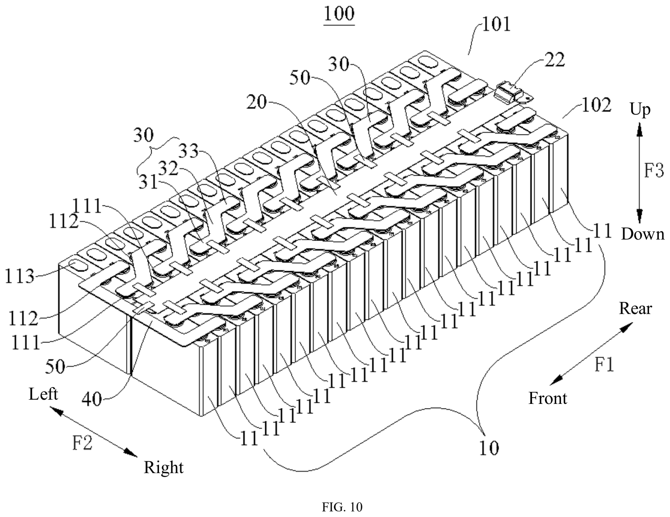

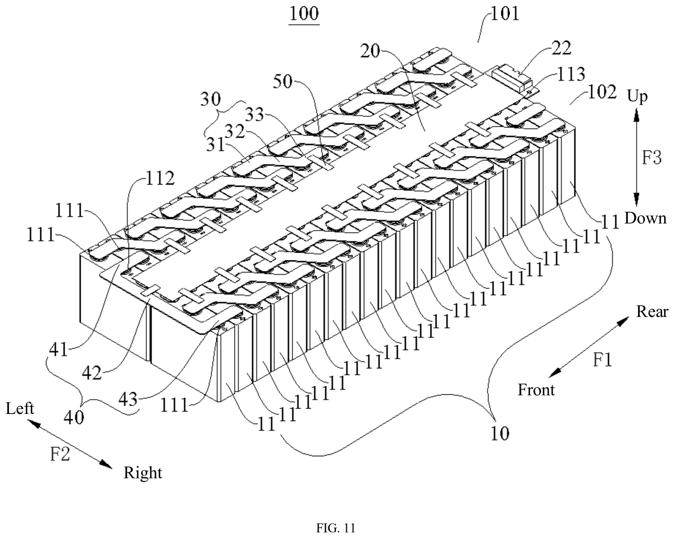

As shown in FIG. 10 and FIG. 11, in some examples, in each battery row 10, a first electrical connection portion 111 of one battery group 103 and a second electrical connection portion 112 of an adjacent battery group 103 are misaligned in the first direction F1 and are connected by a first electrical connection member 30, and the first electrical connection member 30 is bent.

As shown in FIG. 10 and FIG. 11, two adjacent battery cells 11 form a battery group 103. The first electrical connection portions 111 of two battery cells 11 within each battery group 103 correspond to each other in position, and the second electrical connection portions 112 of two battery cells 11 within each battery group 103 correspond to each other in position. Arrangement directions of the two electrical connection portions of each battery group 103 in the first direction F1 are the same, where the first electrical connection portion 111 is located on a same side as the second electrical connection portion 112 of the battery group 103, so that a first electrical connection portion 111 of one battery group 103 and a second electrical connection portion 112 of an adjacent battery group 103 are misaligned.

As shown in FIG. 10 and FIG. 11, in each battery row 10, a plurality of battery cells 11 are arranged along the front-rear direction. The first electrical connection portion 111 of each battery cell 11 is located on a same side (on a same side in the left-right direction) as the second electrical connection portion 112 of the battery cell 11, and arrangement manners of the two electrical connection portions of each battery cell 11 are the same. Thus, electrical connection portions of the same polarity of two adjacent battery cells 11 are opposite each other, and a first electrical connection portion 111 of one battery cell 11 and a second electrical connection portion 112 of an adjacent battery cell 11 are misaligned.

Taking the first battery cell 11 on a front side in FIG. 10 as an example, the first electrical connection portion 111 of the first battery cell 11 is located on a right side of the second electrical connection portion 112, the first electrical connection portion 111 of another battery cell 11 is located on a rear side of the first electrical connection portion 111 of the first battery cell, and the second electrical connection portion 112 of the another battery cell 11 is located on a left side of this first electrical connection portion 111. The two second electrical connection portion 112 on the front side and the two first electrical connection portions 111 on the rear side are connected by the first electrical connection member 30, enabling current transmission between the two battery cells 11.

The first electrical connection member 30 is bent, for example, in a Z shape, facilitating connection of the first electrical connection member 30 to the electrical connection portions of four battery cells 11, thereby enabling current transmission and series or parallel connection of the battery cells.

In one battery row 10, all the first electrical connection members 30 extend in a same direction, and the plurality of first electrical connection members 30 are spaced apart along the front-rear direction, thereby reducing the likelihood of interference between the first electrical connection members 30 and other components, and facilitating connection of the first electrical connection members 30 to the electrical connection portions.

As shown in FIG. 10 and FIG. 11, in some embodiments, the first electrical connection member 30 includes a first connection segment 31, a second connection segment 32, and a third connection segment 33. The first connection segment 31 connects first electrical connection portions 111 of two adjacent battery cells 11, the third connection segment 33 connects second electrical connection portions 112 of another two adjacent battery cells 11, the first connection segment 31 and the third connection segment 33 both extend along the first direction F1, the second connection segment 32 is connected between the first connection segment 31 and the third connection segment 33, and an extension direction of the second connection segment 32 is inclined relative to the first direction F1 and the second direction F2. This allows the first electrical connection member 30 to connect the first electrical connection portions 111 of two adjacent battery cells 11 and connect the second electrical connection portions 112 of another two adjacent battery cells 11, reducing the size of the first electrical connection member 30 to some extent, and optimizing the arrangement manner of the first electrical connection member 30, thereby meeting different design requirements.

In some optional examples, the first connection segment 31 or the third connection segment 33 of the first electrical connection member 30 may be connected to the information collection member 20 using a same conductive member 50. To be specific, the conductive member 50 may be a structural member of a uniform size, reducing the manufacturing costs and also facilitating connection of the conductive member 50 to each first electrical connection member 30, thereby improving assembly efficiency.

As shown in FIG. 6, FIG. 7, FIG. 9, and FIG. 10, in some embodiments, in two adjacent battery rows 10, a first electrical connection portion 111 of a battery cell 11 at one end of one battery row 10 is connected to a second electrical connection portion 112 of a battery cell 11 at one end of an adjacent battery row 10 by a second electrical connection member 40.

The second connection member 40 may be flat or substantially flat; the material of the second connection member 40 may include aluminum, copper, or the like; and the second connection member 40 may be straight or U-shaped.

By providing the second electrical connection member 40, electrical connection between a battery row 10 and an adjacent battery row 10 is achieved, so that a plurality of battery rows 10 are connected to provide larger energy storage capacity or increase the output power.

In some examples, the arrangement directions of the first electrical connection portion 111 and the second electrical connection portion 112 of each battery cell 11 are the same. As shown in FIG. 6, FIG. 7, FIG. 9, and FIG. 10, the battery 1000 includes two battery rows 10, and the two battery rows 10 are arranged along the left-right direction. The arrangement direction of the electrical connection portions of the battery cells 11 in the left battery row 10 is the same as that of the electrical connection portions of the battery cells 11 in the right battery row. To be specific, the first electrical connection portions 111 are all located on a same side as the second electrical connection portions 112. Taking battery cells 11 at a front end in FIG. 6 as an example, in the left battery row 10, the first electrical connection portion 111 of the battery cell 11 is located on a left side of the second electrical connection portion 112, and in the right battery row 10, the first electrical connection portion 111 of the battery cell 11 is also located on the left side of the second electrical connection portion 112. Thus, the second electrical connection portion 112 of the battery cell 11 in the left battery row 10 is adjacent to the first electrical connection portion 111 of the battery cell 11 in the right battery row 10. The second electrical connection member 40 extends along the left-right direction to connect the two electrical connection portions, facilitating connection. This enables electrical connection between the battery row 10 and the adjacent battery row 10, so that a plurality of battery rows 10 are connected to provide larger energy storage capacity or increase output power.

As shown in FIG. 9, in some examples, the second electrical connection member 40 may connect the first electrical connection portions 111 of two adjacent battery cells 11 and the second electrical connection portions 112 of the two adjacent battery cells 11, enabling electrical connection between the two adjacent battery rows 10. In addition, in each battery row 10, the first electrical connection portions 111 of two adjacent battery cells 11 and the second electrical connection portions 112 of another two adjacent battery cells 11 are connected by a first electrical connection member 30, so that each electrical connection member connects four battery cells 11 simultaneously.

As shown in FIG. 7 and FIG. 10, in some examples, the battery cell 11 includes a pressure relief portion 113, and the pressure relief portion 113 is located on a same side as the two electrical connection portions of the battery cell 11. The arrangement directions of the electrical connection portions of two adjacent battery rows 10 may be the same, so that some of the pressure relief portions 113 are located between the electrical connection portions of the two battery rows 10. Thus, the second electrical connection member 40 may be designed to be bent, so that the second electrical connection member 40 and the pressure relief portion 113 are misaligned, preventing the second electrical connection member 40 from obstructing the pressure relief portion 113 so as not to affect gas discharge during thermal runaway.

As shown in FIG. 8 and FIG. 11, in some embodiments, in two adjacent battery rows 10, the arrangement directions of the first electrical connection portion 111 and the second electrical connection portion 112 of the battery cells 11 are opposite.

As shown in FIG. 8 and FIG. 11, the battery 1000 includes two battery rows 10, and the two battery rows 10 are arranged along the left-right direction. The arrangement direction of the electrical connection portions of the battery cells 11 in the left battery row 10 is opposite to that of the electrical connection portions of the battery cells 11 in the right battery row. In the left battery row 10, the first electrical connection portion 111 of the battery cell 11 is located on a left side of the second electrical connection portion 112, and in the right battery row 10, the first electrical connection portion 111 of the battery cell 11 is located on a right side of the second electrical connection portion 112. The second electrical connection portion 112 of the battery cell 11 at the end of the left battery row 10 and the first electrical connection portion 111 of the battery cell 11 at the end of the right battery row 10 are connected by a second electrical connection member 40, enabling electrical connection between the two adjacent battery rows 10.

As shown in FIG. 8 and FIG. 11, in some embodiments, the battery cell 11 includes a pressure relief portion 113, the pressure relief portion 113 is located on a same side as the two electrical connection portions of the battery cell 11, and all pressure relief portions 113 are located between the electrical connection portions of the two battery rows 10. The second electrical connection member 40 may be designed to be bent, so that the second electrical connection member 40 and the pressure relief portion 113 are misaligned, preventing the second electrical connection member 40 from obstructing the pressure relief portion 113 so as not to affect gas discharge during thermal runaway.

As shown in FIG. 8 and FIG. 11, the second electrical connection member 40 includes a fourth connection segment 41, a fifth connection segment 42, and a sixth connection segment 43. The sixth connection segment 43 connects a first electrical connection portion 111 of one or two battery cells 11, the fourth connection segment 41 connects a second electrical connection portion 112 of another one or another two battery cells 11, the sixth connection segment 43 and the fourth connection segment 41 both extend along the first direction F1, the fifth connection segment 42 is connected between the sixth connection segment 43 and the fourth connection segment 41, and the fifth connection segment 42 extends along the second direction F2. This allows the second electrical connection member 40 to connect two battery cells 11 of two adjacent battery rows 10, reducing the size of the second electrical connection member 40 to some extent, and optimizing the arrangement manner of the second electrical connection member 40, thereby meeting different design requirements.

As shown in FIG. 6 and FIG. 9, in some embodiments, the battery cell 11 includes a pressure relief portion 113, the pressure relief portion 113 and the electrical connection portions are located on a same side of the battery cell 11, and the pressure relief portion 113 is located between the first electrical connection portion 111 and the second electrical connection portion 112. Projections of the pressure relief portion 113 in a plane where the first electrical connection member 30 is located are outside the first electrical connection member 30.

The pressure relief portion 113 is a component configured to release pressure inside the battery when the internal pressure of the battery cell 11 becomes excessive, and the pressure relief portion 113 may be an explosion-proof valve or an explosion-proof plate.

As shown in FIG. 6 and FIG. 9, the pressure relief portion 113 and the two electrical connection portions are all located on an upper side of the battery cell 11, and the pressure relief portion 113 is located between the first electrical connection portion 111 and the second electrical connection portion 112. In the up-down direction, the pressure relief portion 113 and the first electrical connection member 30 are misaligned, allowing high-pressure gas to be discharged through the pressure relief portion 113 during thermal runaway of the battery cell 11, and preventing the first electrical connection member 30 from obstructing pressure relief at the pressure relief portion 113 so as not to affect the discharge of the high-pressure gas.

It should be noted that the information collection member 20 is typically a flexible component with low structural strength. Even if the information collection member 20 is located above the pressure relief portion 113 and obstructs part of the pressure relief valve 113, during thermal runaway of the battery cell 11, high-pressure gas can be discharged through the pressure relief portion 113, and the high-pressure gas can break through the information collection member 20, thereby ensuring smooth discharge of the high-pressure gas to some extent.

In this technical solution, misaligning the first electrical connection member 30 and the pressure relief portion 113 can enhance the reliability and stability of the battery cell 10, reducing safety hazards to some extent.

As shown in FIG. 7, FIG. 8, FIG. 10, and FIG. 11, in some embodiments, the battery cell 11 includes a pressure relief portion 113, the pressure relief portion 113 and the electrical connection portions are located on a same side of the battery cell 11, and the pressure relief portion 113 is located on a same side as the first electrical connection portion 111 and the second electrical connection portion 112 in the second direction F2. Projections of the pressure relief portion 113 in a plane where the first electrical connection member 30 is located are outside the first electrical connection member 30.

As shown in FIG. 7, FIG. 8, FIG. 10, and FIG. 11, the pressure relief portion 113 and the two electrical connection portions are all located on an upper side of the battery cell 11, and the pressure relief portion 113 is located on a same side as the first electrical connection portion 111 and the second electrical connection portion 112 (the right side as shown in FIG. 7). In the up-down direction, the pressure relief portion 113 and the first electrical connection member 30 are misaligned, allowing high-pressure gas to be discharged through the pressure relief portion 113 during thermal runaway of the battery cell 11, and preventing the first electrical connection member 30 from obstructing pressure relief at the pressure relief portion 113 so as not to affect the discharge of the high-pressure gas.

It should be noted that the information collection member 20 is typically a flexible component with low structural strength. Even if the information collection member 20 is located above the pressure relief portion 113 and partially obstructs part of the pressure relief valve 113, during thermal runaway of the battery cell 11, high-pressure gas can be discharged through the pressure relief portion 113, and the high-pressure gas can break through the information collection member 20, thereby ensuring smooth discharge of the high-pressure gas to some extent.

In this technical solution, misaligning the first electrical connection member 30 and the pressure relief portion 113 can enhance the reliability and stability of the battery cell 10, reducing safety hazards to some extent.

In some embodiments, the battery cell 11 includes a pressure relief portion 113, and the pressure relief portion 113 and the electrical connection portions are located on different sides of the battery cell 11.

A first electrical connection portion 111 and a second electrical connection portion 112 are provided on an upper side of the battery cell 11, and the pressure relief portion 113 is located on a lower side of the battery cell 11. Thus, the pressure relief portion 113 and the electrical connection portions are located on different sides of the battery cell 11. Under this condition, the first electrical connection member 30 and the second electrical connection member 40 cooperating with the electrical connection portions do not interfere with the pressure relief portion 113, allowing high-pressure gas within the battery cell 11 to be discharged through the pressure relief portion 113, improving the effectiveness of gas discharge by the pressure relief portion 113, and enhancing the reliability and stability of the battery cell. Certainly, the pressure relief portion 113 may alternatively be located on the left or right side of the battery cell 11, and the electrical connection portions are located on the upper or lower side of the battery cell 11, so that the pressure relief portion 113 and the electrical connection portions are located on different sides of the battery cell 11.

As shown in FIG. 6 to FIG. 12, in some embodiments, the plurality of battery rows 10 include a first battery row 101 and a second battery row 102, the first battery row 101 includes a plurality of first battery cells, two adjacent first battery cells are connected by a first electrical connection member 30, the second battery row 102 is located on one side of the first battery row 101 in the second direction F2, the second battery row 102 includes a plurality of second battery cells, two adjacent second battery cells are connected by a first electrical connection member 30, one first battery cell is connected to one second battery cell by a second electrical connection member 40, and the information collection member 20 is electrically connected to a plurality of first electrical connection members 30 and second electrical connection member 40 corresponding to the first battery row 101 and the second battery row 102.

As shown in FIG. 6 to FIG. 12, the first battery row 101 is located on a left side of the second battery row 102. The first battery row 101 includes a plurality of first battery cells, and two adjacent first battery cells are connected by a first electrical connection member 30. The second battery row 102 includes a plurality of second battery cells, and two adjacent second battery cells are connected by a first electrical connection member 30. It can be understood that, as shown in FIG. 6 to FIG. 8 and FIG. 12, the first electrical connection member 30 may connect two adjacent battery cells, and under this condition, the second electrical connection member 40 connects one first battery cell and one second battery cell, so that the plurality of battery cells 11 of the first battery row 101 and the second battery row 102 are connected in series. As shown in FIG. 9 to FIG. 11, the first electrical connection member 30 may alternatively connect four adjacent battery cells, and under this condition, the second electrical connection member 40 connects two first battery cells and two second battery cells, so that the plurality of battery cells 11 of the first battery row 101 and the second battery row 102 are connected in series and parallel.

The plurality of first electrical connection members 30 are connected to the information collection member 20, and the second electrical connection member 40 is connected to the information collection member 20, enabling collection of information from the plurality of battery cells 11 in the first battery row 101 and the second battery row 102, such as collection of temperature or voltage, thereby facilitating status monitoring of the battery cells 11.

Certainly, the battery pack 10 may further include a third battery row, a fourth battery row, and the like. By adjusting positions of the electrical connection portions and the pressure relief portion 113 of the battery cells 11 as well as adjusting a spacing between the first electrical connection portion 111 and the second electrical connection portion 112, one information collection member 20 can be shared by a plurality of battery rows, effectively reducing the number of information collection members 20 in the battery 1000, thereby reducing the manufacturing costs.

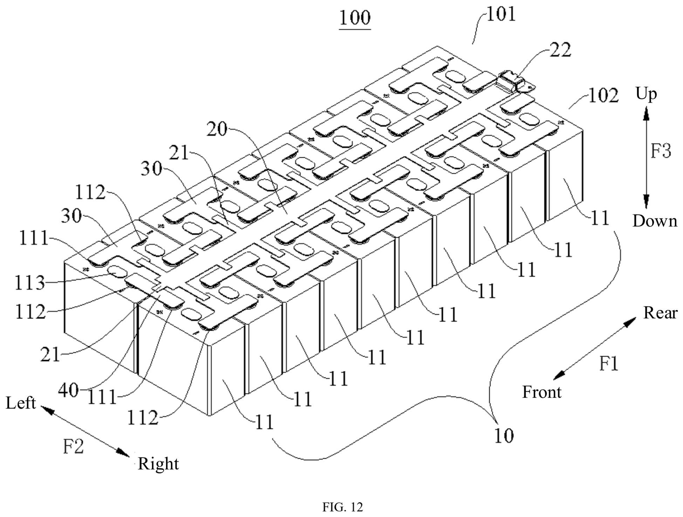

As shown in FIG. 12, in some embodiments, the information collection member 20 is directly connected to the first electrical connection member 30.

As shown in FIG. 12, the information collection member 20 is directly connected to the first electrical connection member 30, thereby reducing the number of components, reducing the manufacturing costs, also reducing assembly operations, and improving assembly efficiency. Certainly, the second electrical connection member 40 may alternatively be directly connected to the information collection member 20.

As shown in FIG. 12, in some embodiments, one of the information collection member 20 and the first electrical connection member 30 includes a leg 21, and the other of the information collection member 20 and the first electrical connection member 30 is connected to the leg 21.

As shown in FIG. 12, the information collection member 20 includes a leg 21, and the leg 21 can extend to the first electrical connection member 30, so that the leg 21 partially overlaps with the first electrical connection member 30, and thus the information collection member 20 is connected to the first electrical connection member 30 through the leg 21, enabling connection between the information collection member 20 and the first electrical connection member 30. The provision of the leg 21 facilitates the connection between the information collection member 20 and the first electrical connection member 30 without excessively increasing the size of the information collection member 20 or the first electrical connection member 30, thereby reducing the manufacturing costs.

Certainly, the first electrical connection member 30 may also include a leg extending toward the information collection member 20, the information collection member 20 is connected to the leg of the first electrical connection member 30, or the leg 21 of the information collection member 20 is connected to the leg of the first electrical connection member 30.

Certainly, in the embodiments shown in FIG. 6 to FIG. 11, the information collection member 20 and the first electrical connection member 30 may alternatively be directly connected, eliminating the conductive member 50 shown in the figures, thereby reducing the manufacturing costs.

As shown in FIG. 12, in some embodiments, the information collection member 20 and the first electrical connection member 30 are welded. For example, the information collection member 20 includes a leg 21, the leg 21 is integrally formed with the information collection member 20, and the leg 21 is welded to the first electrical connection member 30. The two are connected through welding, enabling a reliable connection between the information collection member 20 and the first electrical connection member 30 and also enabling transmission of electrical signals, thereby facilitating connection and improving assembly efficiency.

Additionally, the information collection member 20 may alternatively be directly connected to the second electrical connection member 40. For example, the information collection member 20 includes a leg 21, and the leg 21 is welded to the second electrical connection member 40.

As shown in FIG. 6 to FIG. 11, in some embodiments, each battery pack 100 further includes a conductive member 50, and the first electrical connection member 30 is connected to the information collection member 20 through the conductive member 50.

As shown in FIG. 6 to FIG. 11, the first electrical connection member 30 is spaced apart from the information collection member 20, and the two are connected through the conductive member 50, with one end of the conductive member 50 being connected to the first electrical connection member 30 and the other end being connected to the information collection member 20. The conductive member 50 may be a nickel sheet, and the nickel sheet is a conductive material capable of effectively transmitting current and having good corrosion resistance. The conductive member 50 may be welded to the first electrical connection member 30 and the information collection member 20 respectively, providing a convenient and reliable connection. Additionally, the second electrical connection member 40 may alternatively be connected to the information collection member 20 through the conductive member 50.

In some embodiments, each battery pack 100 further includes a temperature collection module, and the temperature collection module may abut against the battery cell 11 to collect a temperature of the battery cell 11.

Each battery pack 100 includes one or more temperature collection modules, and the temperature collection module is an apparatus for monitoring and recording the temperature of the battery cell. The temperature collection module enables real-time monitoring and control of the temperature of the battery cell to promptly detect temperature anomalies and implement appropriate measures, such as heat dissipation or threshold alarms, to ensure the use safety and use performance of the battery cell 11.

The temperature collection module is in contact with one or more battery cells 11 to obtain accurate temperature data, thereby enabling timely detection of anomalies such as overheating.

In some examples, the temperature collection module is integrated on the information collection member 20.

Integrating the temperature collection module on the information collection member 20 can facilitate measurement and recording of the temperature of the battery cell 11, allowing temperature data to be processed and analyzed together with other parameter data. Thus, the information collection member 20 not only has the function of collecting other parameters of the battery cell but also has the function of collecting the temperature of the battery cell 11.

In some embodiments, the temperature collection module is integrated on the first electrical connection member 30.

Integrating the temperature collection module on the first electrical connection member 30 can facilitate measurement of the temperature of the battery cell 11 and transmission of temperature data to a battery management system or other monitoring devices for real-time monitoring and analysis, enabling real-time control of the temperature of the battery cell 11 and timely response to and management of temperature anomalies. Thus, the first electrical connection member 30 can not only transmit current but also collect temperature, expanding the functions of the first electrical connection member 30.

Additionally, the temperature collection module may alternatively be integrated on the second electrical connection member 40, expanding the functions of the second electrical connection member 40. Certainly, the temperature collection module may alternatively be integrated on the conductive member 50.

In some embodiments, the information collection member 20 is a flexible circuit board (Flexible Printed Circuit, FPC), the flexible circuit board is a flexible printed circuit, and the flexible circuit board is a circuit board manufactured using a flexible substrate, offering bendability and plasticity. Moreover, the flexible circuit board has low rigidity, so even if the flexible circuit board is arranged above the pressure relief portion 113, during thermal runaway of the battery cell 11, high-pressure gas discharged through the pressure relief portion 113 can break through the flexible circuit board and then is discharged to the outside of the battery 1000 through an exhaust channel, so that the high-pressure gas is discharged rapidly, reducing the risk of gas accumulation. Thus, the use of the flexible circuit board can, to some extent, prevent a situation that high-pressure gas cannot be discharged, reducing safety hazards.

According to an embodiment of a second aspect of this application, an electric apparatus 2000 includes the battery 1000 according to the embodiments of the first aspect of this application, where the battery 1000 is configured to provide electrical energy for the electric apparatus 2000. Thus, adopting the above battery 1000 helps to enhance the use safety and reliability of the electric apparatus 2000.

Optionally, as shown in FIG. 1, when the battery 1000 is used in a vehicle, the battery 1000 may be disposed at the bottom, front, or rear of the vehicle. The battery 1000 may be configured to supply power to the vehicle. For example, the battery 1000 may be used as an operational power source for the vehicle. The vehicle may further include a controller and a motor, where the controller is configured to control the battery 1000 to supply power to the motor, for example, for the operational power demands during starting, navigation, and driving of the vehicle.

A battery 1000 and a vehicle including the same according to a specific embodiment of this application are described below with reference to the accompanying drawings.

As shown in FIG. 1, the battery 1000 is disposed at the bottom of the vehicle, and as shown in FIG. 5 and FIG. 6; the battery 1000 includes a plurality of battery packs 100; the plurality of battery packs 100 are arranged along the left-right direction; each battery pack 100 includes two battery rows 10 and one information collection member 20, namely a first battery row 101 and a second battery row 102; and the first battery row 101 is disposed on a left side of the second battery row 102.

The first battery row 101 includes a plurality of first battery cells. Each first battery cell includes a first electrical connection portion 111 and a second electrical connection portion 112 of different polarities. A pressure relief portion 113 is provided between the first electrical connection portion 111 and the second electrical connection portion 112. A first electrical connection portion 111 of one battery cell 11 and a second electrical connection portion 112 of an adjacent battery cell 11 correspond to each other in position. To be specific, positive and negative electrodes are alternately arranged, and two electrical connection portions of different polarities of two battery cells 11 are connected by a first electrical connection member 30.

The second battery row 102 includes a plurality of second battery cells. Each second battery cell includes a first electrical connection portion 111 and a second electrical connection portion 112 of different polarities. A pressure relief portion 113 is provided between the first electrical connection portion 111 and the second electrical connection portion 112. A first electrical connection portion 111 of one battery cell 11 and a second electrical connection portion 112 of an adjacent battery cell 11 correspond to each other in position. To be specific, positive and negative electrodes are alternately arranged, and two electrical connection portions of different polarities of two battery cells 11 are connected by a first electrical connection member 30. Arrangement directions of the electrical connection portions of the first battery row 101 and second battery row 102 are the same.

A first electrical connection portion 111 of a first battery cell is connected to a second electrical connection portion 112 of a second battery cell by a second electrical connection member 40, thereby enabling electrical connection within each battery pack 100.

The information collection member 20 is a flexible circuit board. The information collection member 20 is disposed above the first battery row 101 and the second battery row 102, and in a horizontal direction, the information collection member 20 is located at the center of the entire battery pack 100. The information collection member 20 is connected to the first electrical connection members 30 and the second electrical connection member 40 through a conductive member 50, allowing two rows of battery cells 11 within a same battery row 10 to share one information collection member 20. A temperature detection module is integrated on the information collection member 20.

In the above embodiment, the number of information collection members 20 in the battery 1000 can be effectively reduced, reducing the manufacturing costs of the battery 1000 and enhancing the market competitiveness of the product.

In conclusion, it should be noted that the above embodiments are only used to illustrate the technical solutions of this application rather than to limit them. Although this application has been described in detail with reference to the foregoing embodiments, those of ordinary skill in the art should understand that modifications can still be made to the technical solutions recorded in the foregoing embodiments, or equivalent substitutions can be made to some or all of the technical features. These modifications or substitutions do not cause the essence of the corresponding technical solutions to depart from the scope of the technical solutions of the embodiments of this application, and they should be encompassed within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, **characterized by** comprising: at least one battery pack, each battery pack comprising:
a plurality of battery rows, wherein each battery row comprises a plurality of battery cells arranged along a first direction, electrical connection portions of two adjacent battery cells in each battery row are connected by a first electrical connection member, and the plurality of battery rows arranged along a second direction; and
an information collection member, wherein the information collection member is disposed on one side of the plurality of battery rows in a third direction, the third direction, the second direction, and the first direction are perpendicular to each other, and the information collection member is electrically connected to a plurality of first electrical connection members corresponding to at least two battery rows.

2. The battery according to claim 1, **characterized in that** in each battery pack, wherein the information collection member corresponds to a central position of the plurality of battery rows in the second direction.

3. The battery according to claim 1 or 2, **characterized in that** the information collection member extends along the first direction.

4. The battery according to any one of claims 1 to 3, **characterized in that** the electrical connection portions comprise a first electrical connection portion and a second electrical connection portion, wherein the first electrical connection portion and the second electrical connection portion have opposite polarities, and the first electrical connection portion and the second electrical connection portion are located on a same side of the battery cell.

5. The battery according to claim 4, **characterized in that**
in each battery row, a first electrical connection portion of one battery cell is connected to a second electrical connection portion of an adjacent battery cell by the first electrical connection member.

6. The battery according to claim 5, **characterized in that**
in each battery row, the first electrical connection portion of one battery cell and the second electrical connection portion of the adjacent battery cell correspond to each other in position and are connected by the first electrical connection member, wherein the first electrical connection member extends along the first direction.

7. The battery according to claim 5, **characterized in that**
in each battery row, the first electrical connection portion of one battery cell and the second electrical connection portion of an adjacent battery cell are misaligned in the first direction and connected by the first electrical connection member, wherein an extension direction of the first electrical connection member is inclined relative to the first direction and the second direction.

8. The battery according to claim 4, **characterized in that**
in each battery row, at least two adjacent battery cells form a battery group, wherein first electrical connection portions of the battery cells within each battery group correspond to each other in position; second electrical connection portions of the battery cells within each battery group correspond to each other in position; and a first electrical connection portion of one battery group is connected to a second electrical connection portion of an adjacent battery group by the first electrical connection member.

9. The battery according to claim 8, **characterized in that**
in each battery row, the first electrical connection portion of one battery group and the second electrical connection portion of the adjacent battery group correspond to each other in position and are connected by the first electrical connection member, wherein the first electrical connection member extends along the first direction.

10. The battery according to claim 8, **characterized in that**
in each battery row, the first electrical connection portion of one battery group and the second electrical connection portion of the adjacent battery group are misaligned in the first direction and are connected by the first electrical connection member, wherein the first electrical connection member is bent.

11. The battery according to any one of claims 1 to 10, **characterized in that** in two adjacent battery rows, the first electrical connection portion of the battery cell at one end of one battery row is connected to the second electrical connection portion of the battery cell at one end of the adjacent battery row by a second electrical connection member.

12. The battery according to any one of claims 1 to 11, **characterized in that** the battery cell comprises a pressure relief portion, wherein the pressure relief portion and the electrical connection portion are located on a same side of the battery cell, and projections of the pressure relief portion and the first electrical connection member along the third direction do not overlap.

13. The battery according to any one of claims 1 to 11, **characterized in that** the battery cell has a pressure relief portion, wherein the pressure relief portion and the electrical connection portion are located on different sides of the battery cell.

14. The battery according to any one of claims 1 to 13, **characterized in that** the plurality of battery rows comprise a first battery row and a second battery row, wherein the first battery row comprises a plurality of first battery cells; two adjacent first battery cells are connected by a first electrical connection member; the second battery row is located on one side of the first battery row in the second direction and comprises a plurality of second battery cells; two adjacent second battery cells are connected by a first electrical connection member; one first battery cell is connected to one second battery cell by a second electrical connection member; and the information collection member is electrically connected to a plurality of first electrical connection members and second electrical connection members corresponding to the first battery row and the second battery row.

15. The battery according to any one of claims 1 to 14, **characterized in that** the information collection member is directly connected to the first electrical connection member.

16. The battery according to claim 15, **characterized in that** one of the information collection member and the first electrical connection member comprises a leg, wherein the other of the information collection member and the first electrical connection member is connected to the leg.

17. The battery according to claim 15, **characterized in that** the information collection member and the first electrical connection member are welded.

18. The battery according to any one of claims 1 to 14, **characterized in that** each battery pack further comprises a conductive member, wherein the first electrical connection member is connected to the information collection member through the conductive member.

19. The battery according to any one of claims 1 to 18, **characterized in that** each battery pack further comprises a temperature collection module, wherein the temperature collection module is suitable for abutting against the battery cell to collect a temperature of the battery cell.

20. The battery according to claim 19, **characterized in that** the temperature collection module is integrated on the information collection member.

21. The battery according to claim 19, **characterized in that** the temperature collection module is integrated on the first electrical connection member.

22. The battery according to any one of claims 1 to 21, **characterized in that** the information collection member is a flexible circuit board.

23. An electric apparatus, **characterized by** comprising the battery according to any one of claims 1 to 22.
